# EUROPEAN PATENT APPLICATION

(11) **EP 3 171 303 A1**
(43) Date of publication of application: **24.05.2017**
(21) Application number: 15306838.2
(22) Date of filing: 19.11.2015
(51) Int. Cl.: G06Q 10/06, G06Q 10/10

(54) **METHOD, SYSTEM AND COMPUTER READABLE MEDIUM TO EXECUTE A FLEXIBLE WORKFLOW**

(71) Applicant: ALCATEL LUCENT, 92100 Boulogne-Billancourt (FR)
(72) Inventor: DAENEN, Koen, 2018 Antwerp (BE); TRAPPENIERS, Lieven, 2018 Antwerp (BE); HOBBY, John, Murray Hill, NJ 07974-0636 (US); FORTUNE, Steven, Murray Hill, NJ 07974-0636 (US); PHILIPS, Eline, 2018 Antwerp (BE)
(74) Representative: Berthier, Karine

(57) **Abstract**

Method, system and computer readable medium to execute a flexible workflow is described. The workflow comprises a plurality of tasks. The method comprises a first step 101 of determining a set of possible tasks that can be further executed to reach a predetermined goal. The method also comprises a second step 102 of determining a best next task, of the set of possible tasks, to be executed, according to the set of possible tasks and a set of already executed tasks and a set of specified constraints and a model trained using historic execution data and cost metrics to optimize against and contextual data.

## Description

### FIELD OF INVENTION

The present subject matter relates to the execution of workflows. A workflow consists of an orchestrated and repeatable pattern of activity enabled by the systematic organization of resources into processes that transform materials, provide services, or process information. It can be depicted as a sequence of operations dedicated to the realization of or one or more simple or complex mechanisms. Workflows are a key technology in many domains where processes containing computer tasks and/or human tasks need to be automated in order to achieve a certain goal. Application domains include OSS/BSS orchestration, Cloud orchestration, Customer Experience Management.

In the present divulgation *task* is a generic term and covers the following concepts:
- Atomic task, i.e. an activity described as an atomic task is a single unit in terms of orchestration on process control,
- block task, which is a workflow fragment;
- sub-process or sub-workflow, which is also a workflow fragment but emphasizes the potential decoupling between the calling and called process. In the present subject matter we explicitly use decoupled sub-processes in such way that the process specification as well as the execution engine of the calling and called process may differ.

Generally, a workflow is executed to reach a goal. When a process gets described in an imperative step-by-step style, the process description as such does not per-se disclose that goal. In case of an automated workflow, the executing system has no formal notion of the goal; it just executes the steps until the end event.

Also in the existing applications of underspecified workflows, there is no formal representation or modeling of the goal. For the execution, it is a system that is programmed with a separate imperative logic, which determines whether the goal is reached and hence the workflow can be ended. A so called under specified workflow with constraints may just indicate at a certain point of execution whether exiting is appropriate or not according to the formal constraint declaration.

A related concept in the art of workflows is the concept of a *milestone* (described for example in the web page http://www.workflowpatterns.com/patterns/control/state/wcp18.php) which is an execution state that can be expressed in the workflow specification as being a condition for a certain task to be executed. It is commonly used in imperative workflows that describe processes with concurrent threads of tasks, and is meant to express a synchronization point. Another way of looking at it, in the context of underspecified workflows, is a kind of data constraint: i.e. a certain data must be available before a certain task can be executed.

### BACKGROUND

Such workflow-driven process automation suffers from known drawbacks due to its lack of flexibility since a fully specified workflow process needs to specify all possible execution paths:
- Lack of flexibility & adaptation to changing contexts (implies re-working the workflow model specification)
- Lack of easy optimization of processes (implies re-working the workflow model specification)

Since the abovementioned contexts in which these workflow driven processes need to be executed are intrinsically dynamic in nature, these drawbacks make current workflow technologies a suboptimal solution.

### SUMMARY

This summary is provided to introduce concepts related to execution of workflows.

In one embodiment, a method to execute a flexible workflow is described. The workflow comprises a plurality of tasks. The method comprises a first step 101 of determining a set of possible tasks that can be further executed to reach a predetermined goal. The method also comprises a second step 102 of determining a best next task, of the set of possible tasks, to be executed, according to the set of possible tasks and a set of already executed tasks and a set of specified constraints and a model trained using historic execution data and cost metrics to optimize against and contextual data.

In another embodiment, a system to execute a flexible workflow is described. The workflow comprises a plurality of tasks. The system comprises a first module 201 to determine a set of possible tasks that can be further executed to reach a predetermined goal. The system also comprises a second module 202 to determine a best ordering of the possible tasks, of the set of possible tasks, to execute the predetermined goal, according to the set of possible tasks and a set of already executed tasks and a set of specified constraints and a model trained using historic execution data and cost metrics to optimize against and contextual data.

In another embodiment, a computer-readable medium is described. The computer-readable medium has embedded thereon a method to execute a flexible workflow. The workflow comprises a plurality of tasks. The method comprises a first step 101 of determining a set of possible tasks that can be further executed to reach a predetermined goal. The method also comprises a second step 102 of determining a best ordering of the possible tasks, of the set of possible tasks, to execute the predetermined goal, according to the set of possible tasks and a set of already executed tasks and a set of specified constraints and a model trained using historic execution data and cost metrics to optimize against and contextual data.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents an embodiment of the method of the present subject matter.
Figure 2 presents a first embodiment of the system of the present subject matter.
Figure 3 presents a second embodiment of the system of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Within the present subject matter, the term attempt is introduced. We use the term attempt to refer to a task at the point that (1) the next task is not strictly dictated by the process definition and (2) the execution of the attempt causes a continuation of the process execution that may reach the goal of the actual (sub)-process as a direct consequence of selecting the attempt, and if not the next attempt is tried.

In an embodiment of the present subject matter, the flexibility, within the execution of the workflow, is reached by under-specification of this workflow. In this embodiment the control of the workflow is not completely modeled at design time, allowing for (i) adaptation at instantiation, or (ii) flexible execution at runtime. By flexibility we mean the ability of the workflow process to execute on the basis of a loosely, or partially specified model, where the full specification of the model is made at runtime, and may be unique to each instance. This introduces the notion of an open workflow instance that consists of a core process and several (underspecified) processes that are the so called pockets of flexibility. In some embodiments, these underspecified processes consist of several tasks that can be executed and model a certain goal that must be achieved. The order in which the tasks must be executed is only partially constrained.

In the present subject matter, there is a formal modeling of the goal of a task, i.e., the underspecified workflow that we refer to as pocket-of-flexibility. The modeling of the goal follows the following hypothesis:
- one goal is associated with the workflow;
- when the goal is reached, the workflow is exited even if the constraints would allow further execution;
- a workflow can only be completed when either the goal is reached or a state has been reached that indicates the goal can no longer be reached by further executing of tasks of the given workflow.
- the outcome (aka intermediate result) of the process execution caused by the selection of an attempt until the next point of choice is formally categorized in either:
   o the goal has been reached successfully
   o the goal has not been reached and it makes sense to choose another attempt
   o the goal can't be reached, so the workflow ends unsuccessfully

To determine that the unique goal of the workflow has been reached, the embodiments of the present subject matter use a verification step that is executed immediately after a successfully executed attempt. This verification task with a predefined output, which is either success or fail, is the implementation of the predetermined goal.

In the workflows of the present subject matter, the order of tasks is typically prescribed by arrows that indicate the immediate succession of tasks. In case the intention is to describe a workflow in which there are many possible orderings of the tasks to be executed, an alternative approach is used in which the workflow is described as an unordered set of tasks that in-principle can be executed in any order and any number of times, unless restricted by one of the constraints that are also part of the workflow definition. In this case the tasks are called attempts.

Such a constraint imposes a certain ordering or limits a certain ordering of execution in relation to the execution of another task (or itself) or the availability of some data. Constraints can be expressed in relation to a single task (e.g. a task can only be executed once during a process), or two or more tasks (we say that the tasks are connected by the constraint).

These constraints can be classified as limitation constraints and obligation constraints. Limitation constraints are constraints that specify that a certain attempt can or cannot be executed. For instance, a not co-existence constraint specifies that the two attempts that are connected by this constraint cannot both be executed during the execution of the workflow; a precedence constraint specifies that a certain task, to which the constraint is connected, can only be executed after finishing the execution of the task, from which the constraints originates. Obligation constraints are constraints used to specify a must relationship. A chain response constraint, for example, specifies that a certain attempt must be executed after the execution of the attempt from which the constraint originated.

Therefore, by using the previously described embodiments, the processes that are started with the same input can lead to different execution paths depending on the tasks chosen at any flexible point in the process.

In some other embodiments, underspecified workflows are completed with additional data, constraints, rules, linear temporal logic, to come to a sufficiently specified workflow.

Some other embodiments focus on the under-specification of the control flow in a process. However in these embodiments, there is no support for decisions that need to be made at runtime.

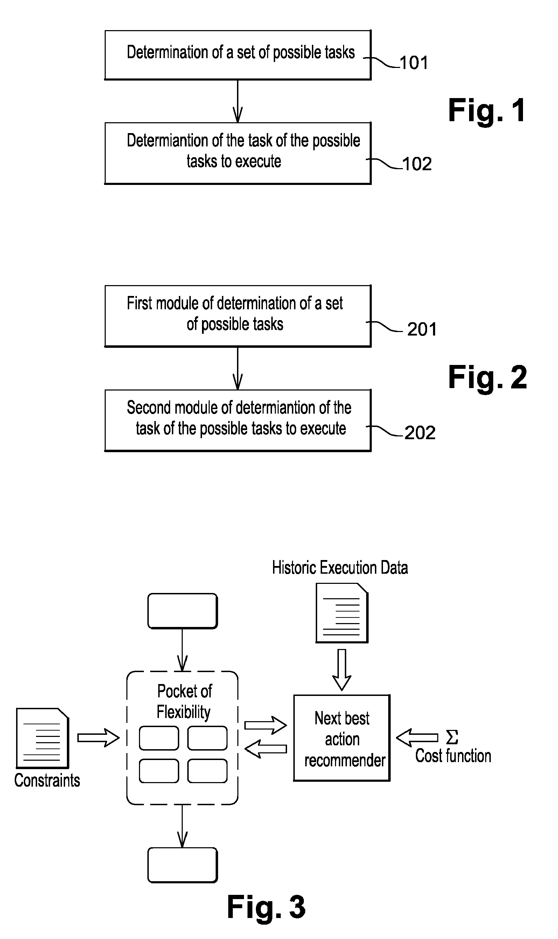

An embodiment of the present subject matter is a method to execute a flexible workflow. This method is presented figure 1. The workflow comprising a plurality of tasks, the method comprising
a first step 101 of determining a set of possible tasks that can be further executed to reach a predetermined goal,
a second step 102 of determining a best next task, of the set of possible tasks, to be executed, according to:
- the set of possible tasks and
- a set of already executed tasks and
- a set of specified constraints and,
- a model trained using historic execution data and
- cost metrics to optimize against and
- contextual data.

In another embodiment of the present subject matter, the second determination step is also configured to take into account:
- a precedence graph of the tasks

The historic execution data comprises, per task, a cost (or more general overall score) and whether the task could reach the goal or not.

By historic execution data we mean a time-stamped logging: it is a sequence of records. Each record reports an execution event and comprises a time-stamp, an identifier referring to the task to which the event is related, the type of event (e.g. start execution, completed), and optionally all kinds of extra info, such as the result and whether the goal has been reached.

In an embodiment in order to get the model trained using historic execution data, we take the average of all previous values (or of the x last values), e.g. to forecast the probability, cost and result score. In another embodiment we are using binary logistic regression, (for example described in https://en.wikipedia.org/wiki/Logistic_regression), e.g. to forecast the probability that the attempt will lead to an exit or not, or we are using ridge regression (for example described in: https://en.wikipedia.org/wiki/Tikhonov_regularization), e.g. to forecast the expected time that an attempt execution will take.

The probability to exit, the cost and result score of an attempt execution in a given pocket-of-flexibility, may be influenced by external facts, e.g., in the case of CEM the type of customer (business versus private). Alternatively, the type of device that the customer uses (Smartphone versus classic mobile phone) may influence which remediation attempt works best. Although the way in which it exactly influences these figures cannot be expressed in a deterministic formula or constraint, a statistical approach can be used based on regression.

The set of items for which an unambiguous classification or quantification is possible, and that may influence the prediction model, is called the context. These facts are checked before (or during) the workflow execution, and represented as a set of key-value pairs, in which the key represents the item and the value represents the class or quantity. The context is recorded as part of the history of attempt executions with their scores. And the actual context is used at the moment a selection has to be made as input for the forecasting.

In an embodiment in order to obtain the model trained using historic execution data we either train this model with each executed attempt, or after each process has been ended (and evaluated) or in batch at fixed intervals (e.g. each day).

In an embodiment, the regression model comprises a matrix X and a vector Y where the i^{th} row X(i) is the i^{th} feature vector and the corresponding Y entry Y(i) describes the result of an attempt for features X(i). The predict function expects a single row and predicts the corresponding value. A separate prediction model is maintained for the exit prediction, cost and score. Each row of the matrix X represents which attempt was executed as well as the context in which the attempt was executed. The corresponding value of the vector Y represents receptively the exit (1 for exit and 0 for no exit), the cost and score. To predict the exit probability, binary logistic regression is used, while ridge regression to predict a scalar value such as cost and the score.

By contextual data, we mean a set of items for which an unambiguous classification or quantification is possible, and that may influence the prediction model. These contextual data are also called context. These facts are checked before (or during) the workflow execution, and represented as a set of key-value pairs, in which the key represents the item and the value represents the class or quantity. The context is recorded as part of the history of attempt executions with their scores. And the actual context is used at the moment a selection has to be made as input for the forecasting.

In an embodiment, the second determination step 102 is also configured to determine the best ordering of the possible tasks to achieve the predetermined goal.

In an embodiment, the first determination 101 is configured to take into account all the constraints. This mechanism is based on keeping track of the events representing the start or completion of a task. Given the list of the events that have occurred so far during the execution of a pocket of flexibility, the set of events that may occur immediately after without violating the constraints can be determined. In case of a sequential approach, after each completion event, the set of possible start events determines which task can or must be executed. When no task can be executed, the workflow will exit. When a certain task must be executed at that moment (and before any other task) or when there is only a single attempt possible, the next task is unambiguously determined and thus executed. In case several attempts are possible, we call these set the allowed attempts at the point-of-choice that has been reached.

There are two ways of taking into account all the constraints.

The first is based on the PhD thesis of Pesic (Pesic, Maja. Constraint-based workflow management systems: shifting control to users. Diss. Technische Universiteit Eindhoven, 2008.) in which he defined a basic set of constraints, each explained with a human understandable description, a graphical notation and a formal expression in Linear Temporal Logic (LTL). Per constraint an LTL expression describes the ordering of related (start/complete task) events. The constraints can be combined to express all kinds of complex workflow constraints. The thesis also clarifies how to verify when a list of events (in our case a history of the executed attempts) violates the constraints or not. A permanent violation means that each extension of the list would still violate the constraints. When a compliant list of events (i.e. the history of attempt executed so far at a certain point-of-choice) would turn into a permanent violation by adding a certain attempt, we can exclude that attempt from the set of allowed attempts at that point-of-choice. A temporary violation means that the constraints would not be met if the process is terminated at that point, but might comply after a further execution. That further execution must then contain the execution of one or more attempts. Still at that point, the given attempt is still part of the allowed attempt set, as well as all attempts that would result in a compliant execution list. As such, the set of allowed attempts is constructed by eliminating the attempts that would permanently violate the constraints when appending the historical list of execution events with the start event of the given attempt.

The second approach is based on already known rule-engines (e.g. the software Drools). This rule-engine is based on rules and facts. A rule consists of conditions (of facts) and actions that are fired when the conditions are met. Facts about a certain pocket of flexibility definition can be the attempts and constraint relations, while facts about a certain running process instance can be the occurred events (of started/executed attempt). The rule actions can be used to invoke the logic to determine the next task and update the set of allowed attempts. At the start of the pocket of flexibility, all rules are fired until the next task or set of allowed attempts is determined. Then an attempt is selected for execution (see further). The latter is added as fact to the rule engine's fact database and the rules are fire again.

In an embodiment, the second determination step 102 is configured to rank the possible tasks using a so called next-best-action (NBA) algorithm, followed by the actual selection depending on the problem space. After that, the selection is made fully automatically by selecting the top ranked possible task.

The ranking could be based on consolidating the predictions of exit probability, cost and/or result score into a total score. In the latter score, higher means better in function of what one want to optimize. In the absence of constraints, the second determination step 102 could calculate the total score of the attempts individually:
1. To optimize for cost, the total score can be defined as the probability to exit divided by the predicted cost. (In case of Customer Experience Management (CEM), we refer to the attempt score as resolution power and calculate it as the probability to fix or identify the issue divided by the time it took to achieve this.)
2. To optimize for best value for the money, the total score can be defined as the probability to exit multiplied by the predicted result score divided by the predicted cost.

In an embodiment of the determination step 102 the following information are used as input of the determination:
- the set of possible tasks and
- a set of already executed tasks and
- a set of specified constraints and a precedence graph, derived from the constraints and
- a model trained using historic execution data and
- cost metrics to optimize against and
- context data

This information is passed to the second determination step 102 after the first determination step 101 determine a set of possible tasks to execute. Thanks to this two step architecture, some so called obligation constraints will not be known by the second determination step 102. These so called obligation constraints (for example the fact that a certain task must be executed, i.e., there is no choice), can be taken care of by the first determination step 101, since the second determination step 102 is only used to make a smart decision when choosing the next task to be executed.

In another embodiment, tasks with a high overall score may be excluded from the set of possible tasks because of a constraint that can be fulfilled by first executing another task. Although the latter may have a low overall score itself, the fact that its execution will result in admitting the powerful task to the set of the allowed tasks at the next point-of-choice, may turn the given task into the best next choice.

In an embodiment, the second determination step 102 is configured to select one of the possible tasks of the workflow based on cost metrics that represents Key-Performance-Indications (KPIs). Such cost metrics consist of a score for a number of aspects that can be measured. These cost metrics are:
1. Either related to the process execution, such as time-to-execute, consumed resources, production cost, etc., which in fact all comes down to cost in a broad sense.
2. Or, related to the process result (output), such as amount of produced artifacts, height, weight, commercial value, satisfaction ratio, percentage of solved issues, etc.

To compare two possible tasks that aim at the same goal, these cost metrics are measured over several executions and an average is taken per task. In particular, optimization of a task means could have the aim of lowering cost and/or obtaining a better result. (In each specific business domain there is a common understanding of the meaning of a better result, e.g., higher throughput, less weight, higher satisfaction ratio.) In order to rank the tasks in terms of "which is the most optimized", several approaches can be taken.
For example in a first approach the task is selecting the one of the possible tasks with the lowest cost respecting a minimum result score. For each aspect of the result, a minimum score is defined. When one of these is not reached, the process is disqualified for the ranking. When it meets these minima, the process is ranked according to the overall cost (i.e., a weighted average of all cost aspects).
In another approach, the task selected is the one that allows the best value for the money ratio. For both the result aspects and the cost, a weighted average figure is calculated. In this embodiment the possible tasks are ranked based on the ratio result score over cost.

In another embodiment, the precedence graph is derived from the constraints that express a precedence relation between tasks of the possible tasks determined during the first determination step 101. In this precedence graph, all tasks of the possible tasks determined by the first determination step 101 are represented as nodes and the precedence constraints are modeled as edges in the graph. By limiting the selection to the set of possible tasks, all obligation constraints can be met. By passing the precedence graph to the second determination step 102, it can incorporate the enabling effect of executing a certain task. To calculate the total score for a certain attempt, all possible attempt sequences starting with the given attempt are considered. Each attempt may only appear once in such sequence. Then a total score is made taken into account the predictions for each attempt that appears in these sequences. This calculation is based on the heuristic as described in the attached document. In essence, this comes down to a resolution power of the possible attempt sequences starting with the given attempt and based on the prediction of exit probability and cost.

In an embodiment the second determination step 102 is a machine learning algorithm that selects the best task as the task with maximum resolution power. Resolution power is exit probability divided by cost, or preferably success probability divided by cost, or the ratio between the resolution probability and the resolution time.

In another embodiment, the second determination step 102 is configured to determine the best task as being a task of the set of possible tasks that stops the workflow. By a task that stops the workflow we mean a task that will be the final task of the workflow.

In other words within the embodiment of the previous section, the second determination 102 step is configured to choose execution order of tasks, respecting constraints. The goal of this step is to find a task that satisfies the exit condition as quickly as possible, at which point the workflow terminates.

In other words, the method of this embodiment proposes an approach to add a Key-Performance-Indication (KPI) driven runtime decision support to flexible workflows, thus effectively allowing runtime optimization and adaptation of the workflow (including self optimization). In this embodiment, a flexible process is enhanced with external recommendations that help the process determines the next task that must be taken during workflow execution. In this embodiment, deciding which of the tasks is best executed is determined based upon (i) a set of specified constraints, (ii) a model trained using historic execution data, (iii) cost metrics (derived from KPIs) to optimize against, and (iv) contextual data.

Using the method of the present subject matter and during the execution of a flexible workflow, the order in which tasks can be executed is only partially defined. At any moment in time, the tasks that can be executed next, without violating any modeled constraints, can be determined. In order to let an external recommendation system make this decision, it must be informed of the different tasks that can be potentially executed at the next instant in the workflow execution. The fact whether the selected task has led to achieving the goal of the pocket-of-flexibility (before reaching the next point where a selection has to be made) as well as the measurement(s) to derive the KPI are fed back to the recommendation system via the Historic Execution Data. A simple example of such measurement is the execution duration when the KPI is to keep the execution time as short as possible. Other examples of measurement are a goal score, a customer appreciation score, etc.

In other words, within the previously described embodiment of the present subject matter, the evaluation and selection of tasks is based on the following principles:

The first principle is the pocket-of-flexibility (PoF), which is a workflow in which the order of task execution is not fully specified, such that at certain points during the execution, a choice must be made to decide which task will be executed next. These choices impact the actual process execution and as such also the KPI metrics. The ability of making these choices, without changing the process specification, is leveraged to optimize over time for the lowest cost or best value-for-money.

The second principle is that the pocket-of-flexibility has a predefined goal which is expressed as an executable task which returns whether the goal has been reached or not.

The third principle is the fact that an attempt is a task that can be selected at a point-of-choice, and in general aims to reach the goal. A successful execution of an attempt is followed by a task that verifies whether the goal has been reached. An exception may be an attempt that cannot by itself reach the goal, but that is a precondition of another attempt. When selected for execution, the process execution is continued and results in either exiting the workflow or reaching the next point-of-choice. In case the pocket-of-flexibility is a sub-process, exiting the workflow, means to end the sub-process and return to the parent process. Reaching the exit must correspond to either having reached the goal of the pocket-of-flexibility or concluding that reaching the goal has become impossible with the attempts specified in the given pocket-of-flexibility.

The fourth principle defines that attempts or possible tasks of a pocket of flexibility are evaluated based on:
1. the probability to lead to an exit of the workflow, and/or
2. the attempt cost, i.e., the cost for which the further process execution until the next-point-of-choice (or exit) is responsible, i.e., the delta between the accumulated cost before and after this execution, and/or
3. the attempt result score, i.e., the result score of the workflow in case the given attempt caused the exit.

Based on a chosen forecasting algorithm and taking the history of measured executions as input, a probability, cost and result score are forecasted for each attempt. To score an attempt with a single value, two approaches are possible:
1. To optimize for cost, the attempt score can be defined as: probability to exit divided by the cost. (In case of Customer Experience Management (CEM), we refer to the attempt score as resolution power and calculate it as probability to fix or identify the issue divided by the time it took to achieve this.)
2. To optimize for best value-for-money, the attempt score can be defined as: probability to exit multiplied by the result score divided by the cost.

According to the fifth principle, a pocket of flexibility may contain constraints that limit the choice of allowed attempts at a certain point-of-choice. These constrains can be used to express:
1. business policies which have to be enforced irrespective the goal or optimization strategy,
2. technical dependencies between attempts, e.g. an attempt cannot be executed without being proceeded by a certain other attempt,
3. dependencies between attempts that can be deterministically expressed and that should not be ignored by relying on the prediction model; e.g., two attempts to resolve a certain customer experience issue may be different in implementation but based on the same approach, thus when in a certain case one of the two does not reach the goal, the other will (most probably) fail as well.

At the point the next attempt selection has to be made, the previous attempt execution will be scored and added the historical data. This historical data will be used to calculate the overall attempt score based on the above principles. Attempts for which no historical data is yet available will get a default score, e.g., the average score of attempts for which historical data is available.

An embodiment of the present subject matter is a system to execute a flexible workflow. The workflow comprising a plurality of tasks. This system is described figure 2 and comprises:
a first module 201 to determine a set of possible tasks that can be further executed to reach a predetermined goal
a second module 202 to determine a best next task, of the set of possible tasks, to be executed, according to:
   - the set of possible tasks and
   - a set of already executed tasks and
   - a set of specified constraints and,
   - a model trained using historic execution data and
   - cost metrics to optimize against and
   - contextual data.

In another embodiment of the system, the second module is also configured to take into account:
- a precedence graph of the tasks

The figure 3 presents another embodiment of this system. In the system of this embodiment, the so called pocket of flexibility corresponds to the first module and the so called next best action recommender corresponds to the second module. This system is not required to know the exact model of the workflow definition (as does the pocket of flexibility execution engine), i.e. the way the constraints are modeled; though to take an intelligent decision it should at least understand when the execution of a certain task (which may not be capable of reaching the workflow goal in any case) enables (i.e. unlocks) one or more other tasks of the same workflow definition. Such information can be modeled in a precedence (or dependency) graph. The pocket of flexibility execution engine will initiate the recommendation system with such precedence graph and send updates about the execution to indicate which dependencies are already fulfilled. This may be done via extra parameters on each selection request. To support a recommender with classification capability, both the Historic Execution Data and the selection request may be extended with context data, such as type of subscription, type of device etc.

Using the external recommendation, the system of the previous section influences the execution path of the workflow by prior knowledge and will give the best chance of leading to the best fulfillment (based on the KPI) of the process goal.

In an embodiment of the present subject matter, the method of the figure 1 is configured to be realized by the system of the figure 2. In this embodiment the wherein the first determination step 101 is realized by the first module and the second determination step 102 is realized by the second module. Furthermore the method comprises a step of sending by the first module to the second module a request for a recommendation. This request includes:
- the set of possible tasks and/or
- a set of already executed tasks and/or
- a set of specified constraints and/or,
- a model trained using historic execution data and/or
- cost metrics to optimize against and/or
- contextual data.

In an embodiment the request also comprises
- a precedence graph of the tasks
The method also comprises a step of sending, by the second module to the first module, the best task to execute and a step of executing by the first module the best task.

In an embodiment the system comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions of the first and second modules are realized by the processor and may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

A person skilled in the art will readily recognize that steps of the methods of the present subject matter can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, of the figure 1, to execute a flexible workflow. The workflow comprising a plurality of tasks. The method comprises :
a first step 101 of determining a set of possible tasks that can be further executed to reach a predetermined goal,
a second step 102 of determining a best next task, of the set of possible tasks, to be executed, according to:
   - the set of possible tasks and
   - a set of already executed tasks and
   - a set of specified constraints and,
   - a model trained using historic execution data and
   - cost metrics to optimize against and
   - contextual data.

In an embodiment a computer-readable medium having embedded thereon a computer program described in the previous section is proposed.

## Claims

1. Method to execute a flexible workflow, the workflow comprising a plurality of tasks, the method comprising
a first step (101) of determining a set of possible tasks that can be further executed to reach a predetermined goal,
a second step (102) of determining a best next task, of the set of possible tasks, to be executed, according to:
• the set of possible tasks and
• a set of already executed tasks and
• a set of specified constraints and
• a model trained using historic execution data and
• cost metrics to optimize against and
• contextual data.

2. Method according to the claim 1 wherein the second determination step (102) is also configured to determine the best task according to
• a precedence graph of the tasks
and/or the second determination step (102) is a machine learning algorithm that selects the best task as the task with maximum resolution power.

3. Method according to claim 1 or 2 wherein the second determination step (102) is configured to determine the best task as being a task of the set of possible tasks that stops the workflow.

4. Method according to any of the previous claims wherein the second determination step (102) is also configured to determining the best ordering of the possible tasks to execute the predetermined goal.

5. System to execute a flexible workflow, the workflow comprising a plurality of tasks, the system comprising:
A first module (201) to determine a set of possible tasks that can be further executed to reach a predetermined goal,
A second module (202) to determine a best ordering of the possible tasks, of the set of possible tasks, to execute the predetermined goal, according to:
• the set of possible tasks and
• a set of already executed tasks and
• a set of specified constraints and
• a model trained using historic execution data and
• cost metrics to optimize against and
• contextual data.

6. System according to claim 5 wherein the second module is also configured to determine the best task according to
• a precedence graph of the tasks
and/or the second module (202) is a machine learning algorithm that selects the best task as the task with maximum resolution power.

7. System according to claim 5 or 6 wherein the second module (202) is configured to determine the best task as being a task of the set of possible tasks that stops the workflow.

8. System according to claim 5 or 6 or 7 wherein the second module (202) is also configured to determining the best ordering of the possible tasks to execute the predetermined goal.

9. A computer-readable medium having embedded thereon a method to execute a flexible workflow, the workflow comprising a plurality of tasks, the method comprising
a first step (101) of determining a set of possible tasks that can be further executed to reach a predetermined goal,
a second step (102) of determining a best ordering of the possible tasks, of the set of possible tasks, to execute the predetermined goal, according to:
• the set of possible tasks and
• a set of already executed tasks and
• a set of specified constraints and
• a model trained using historic execution data and
• cost metrics to optimize against and
• contextual data.

10. Computer-readable medium according to the claim 9 wherein the second determination step (102) is also configured to determine the best task according to
• a precedence graph of the tasks
and/or the second determination step (102) is a machine learning algorithm that selects the best task as the task with maximum resolution power.

11. Computer-readable medium according to claim 9 or 10 wherein the second determination step (102) is configured to determine the best task as being a task of the set of possible tasks that stops the workflow.

12. Computer-readable medium according to claim 9 or 10 or 11 wherein the second determination step (102) is also configured to determining the best ordering of the possible tasks to execute the predetermined goal.
